# EUROPEAN PATENT SPECIFICATION

(11) **EP 2 314 735 B1**
(45) Date of publication and mention of the grant of the patent: **09.07.2014**
(21) Application number: 09754691.5
(22) Date of filing: 26.05.2009
(51) Int. Cl.: C23C 22/12, C23C 22/20, C23C 22/40, C23C 22/42, C23C 22/48, C23C 28/04, C23C 22/46, B05D 7/14

(54) **FINISHING AGENT AND MEMBER HAVING OVERCOAT FORMED FROM THE FINISHING AGENT**
ÜBERZUGSMITTEL UND ELEMENT MIT ÜBERZUG DARAUS
AGENT DE FINITION ET ÉLÉMENT AYANT UNE SURCOUCHE FORMÉE À PARTIR DE L' AGENT DE FINITION

(30) Priority: 27.05.2008 JP 2008138060
(43) Date of publication of application: 27.04.2011
(73) Proprietor: Yuken Industry Co., Ltd., Aichi 448-8511 (JP)
(72) Inventor: SAITO Tomoko, Kariya-shi Aichi 448-0821 (JP); NAGAYA Yasuhiro, Hazu-gun Aichi 444-0703 (JP); ISHIKAWA Tomoko, Kariya-shi Aichi 448-0043 (JP); SUGIURA Toshihiro, Chiryu-shi Aichi 472-0021 (JP)
(74) Representative: Klunker . Schmitt-Nilson . Hirsch
(86) International application number: PCT/JP2009/059596
(87) International publication number: WO 2009/145183

(56) References cited:
- EP-A1- 1 433 878
- WO-A1-99/35307
- JP-A- 7 062 554
- JP-A- 2000 160 353
- JP-A- 2000 160 353
- JP-A- 2000 160 354
- JP-A- 2000 160 355
- JP-A- 2003 268 564
- JP-A- 2005 206 872
- JP-A- 2005 290 551
- JP-A- 2005 290 551
- JP-A- 2006 028 372
- JP-A- 2006 152 436
- JP-A- 2006 263 625
- JP-A- 2007 284 710
- JP-A- 2007 284 710

## Description

### Technical Field

The present invention relates to a finishing agent and a member having an overcoat formed from the finishing agent. In particular, the present invention relates to a chromium-free finishing agent for use in forming an overcoat on an oxidation-resistant layer, such as a hexavalent chromium-free chemical conversion coating, and a member having an overcoat formed from the finishing agent.

### Background Art

Recently, the use of hazardous metals such as lead, mercury, cadmium, and hexavalent chromium has been restricted by environmental regulations such as RoHS (Restriction of the Use of Certain Hazardous Substances in Electrical and Electronic Equipment) and ELV (End of Life Vehicles) Regulations.

The surface of a member having a metallic surface, such as a galvanized member, is subject to oxidation. Therefore, an oxidation-resistant layer is often provided on the surface. A chemical conversion coating is one such oxidation-resistant layer and a chromate coating, which is a chemical conversion coating, has excellent anti-oxidation properties.

Since a chromate coating obtained from an ordinary chemical conversion treatment solution containing hexavalent chromium contains soluble hexavalent chromium, use of the chemical conversion coating is restricted by the above-mentioned regulations. Therefore, a chemical conversion treatment solution containing trivalent chromium is becoming popular as a chemical conversion treatment solution for forming an oxidation-resistant layer as a replacement for a chemical conversion treatment solution containing a chromate salt containing hexavalent chromium.

An organic and/or inorganic coating is sometimes formed on a chromate coating obtained from a chemical conversion treatment solution containing trivalent chromium, which has become common, so as to provide better anti-corrosion properties, more glossiness, more uniformity of color, and improved scratch resistance against collision of members.

A finishing layer formed on an oxidation-resistant layer such as a chemical conversion coating may be referred to as an overcoat, a liquid composition for forming the overcoat may be referred to as a finishing agent, and a multi-layer product consisting of the oxidation-resistant layer and the overcoat may be referred to as a surface treatment layer.

Patent Document 1 discloses a finishing composition for forming a trivalent-chromium chromate coating containing a source of trivalent chromium, a source of phosphate, a source of zinc ions, and a chelating agent which is able to form a coordination compound with trivalent chromium.

Patent Document 2 discloses a finishing agent for forming a hexavalent chromium-free chemical conversion coating containing an ion of an oxygen acid of P and a chromium (III) ion. In one preferred embodiment, an ion of an oxygen acid of P is provided from one or more substances selected from the group consisting of ohthophosphoric acid, condensed phosphoric acids, phosphorous acid, hypophosphorous acid, and salts of the above-described acids, and the finishing agent also contains at least one substance selected from the group consisting of metal ions, metal oxide ions, carboxylic acids, carboxylates, and silicon-containing compounds.

Patent Document 3 discloses a finishing agent for forming a chemical conversion coating containing a polyolefin. According to one preferred embodiment, the polyolefine consists of polyethylene and/or polypropylene in the form of particles having an average diameter of 0.001 to 20 micrometers, and the particular polyolefin is able to agglutinate in an acidic environment.
Patent Document 1: JP2005-23372A
Patent Document 2: JP2005-320573A
Patent Document 3: JP2005-320405A

### Disclosure of Invention

Most recently, a chromium-free surface treatment layer, which does not contain trivalent chromium or hexavalent chromium, has been required from the viewpoint of environmental conservation. Therefore, it is now important to reduce the usage of trivalent chromium in a surface treatment layer.

On the other hand, the demand for improved anti-corrosion properties has been increasing year by year, as seen by the trend towards a 20 year guarantee against corrosion. When a surface treatment layer of a member is damaged by a collision with another member, the surface treatment layer cannot meet the above-described strict demand for anti-corrosion properties. Therefore, an overcoat, which constitutes an outmost layer of a surface treatment layer, must have higher anti-scratch properties, namely, a higher coating hardness.

However, conventional overcoats do not sufficiently meet the above-described demand.

Overcoats disclosed in Patent Documents 1 and 2 do not come close to meeting the above-described demand because they contain trivalent chromium.

The overcoat disclosed in Patent Document 3 can withstand a moderate impact such as an impact caused by moderate swinging of parts having the overcoat as shown in an example in that document, because the overcoat consists only of organic substances. When an oxidation-resistant layer of the surface treatment layer consists of a chemical conversion coating, the color of the surface treatment layer is directly affected by the color of the chemical conversion coating, because the overcoat is clear and colorless. Thus, such a surface treatment layer has the problem of low uniformity of its color.

The object of the present invention is to provide a finishing agent which can provide a good balance of basic properties which are demanded of an overcoat formed on an oxidation-resistant layer such as a chemical conversion coating, as well as to meet the demand for chromium-free coatings, and a member having an overcoat formed by the finishing agent.

The inventors of the present invention investigated how to achieve the above object and found that a finishing agent comprising a chemical substance containing aluminum and existing in a liquid composition in a specific form, a chemical composition containing zinc and existing in a liquid composition in a specific form, a chemical substance containing a specific element, and a chelating agent which is able to form a coordination compound with an aluminum ion can form an overcoat having excellent properties. The finishing agent is as recited in claim 1.

The present invention was achieved based on the above-mentioned findings and is as follows.

According to one aspect of the present invention, there is provided a finishing agent as recited in claim 1 for use in forming an overcoat on an oxidation-resistant layer on a substrate, comprising: an aluminum-containing substance in the form of at least one of a cation, a salt of the cation, and a coordination compound containing the cation; a zinc-containing substance in the form of at least one of a cation, a salt of the cation, and a coordination compound containing the cation; a chelating agent which is able to form a coordination compound with an aluminum ion; and a film-forming substance containing a first element selected from the group consisting of P, Mo, W, Ce, Mn, Si, Ti, Zr, and V.

The term "an aluminum-containing substance" means a chemical substance containing aluminum and existing in the finishing agent according to the present invention in the form of at least one of a cation, a salt of the cation, and a coordination compound containing the cation.

The term "a zinc-containing substance" means a chemical substance containing zinc and existing in the finishing agent according to the present invention in the form of at least one of a cation, a salt of the cation, and a coordination compound containing the cation.

Because the aluminum-containing substance can exist as an aluminum ion and the zinc-containing substance can exist as a zinc ion, the above-described finishing agent according to the present invention is a neutral or acidic liquid composition.

The term "a film-forming substance" means a chemical substance containing the above-described first element. It is thought that the film-forming substance is directly or indirectly involved in forming an overcoat. Such functions of the film-forming substance are similar to the functions of the above-described aluminum-containing substance. Examples of the film-forming substance defined in the present invention include orthophosphoric acid, an orthophosphate ion, an alkali metal orthophosphate, molybdenum acid, a molybdate ion, an alkali metal molybdate, and a titanium ion. The film-forming substance may be referred to below as a first film-forming substance to distinguish this substance from the types of film-forming substances described below.

The first film-forming substance may contain aluminum or zinc, such as aluminum phosphate. In this case, the first film-forming substance can act as the aluminum-containing substance or the zinc-containing substance. Therefore, examples of the finishing agent of the present invention include a finishing agent comprising such a first film-forming substance and the above-described chelating agent.

The content of the above-described film-forming substance, namely, the first film-forming substance, is preferably 0.1 to 200 g/l.

The above-described film-forming substance, namely, the first film-forming substance, preferably contains a second element selected from the group consisting of Ce, Mn, Ti, and Zr, and is in the form of at least one of a cation of the second element, a salt of the cation, and a coordination compound containing the cation.

The film-forming substance which contains the above-described second element and is in the above-described form in the finishing agent of the present invention may be referred to below as a second film-forming substance to distinguish this substance from other types of film-forming substance. Examples of the second film-forming substance include a cerium ion, a manganese ion, a titanium (IV) ion, and zirconium ion.

The above-described film-forming substance, namely, the first film-forming substance, preferably contains a third element selected from the group consisting of Mo, W, Si, and V, and is in the form of at least one of an oxygen acid of the third element, an ion of the oxygen acid and a salt of the oxygen acid.

The film-forming substance which contains the above-described third element and is in the above-described form in the finishing agent of the present invention may be referred to below as a third film-forming substance to distinguish this substance from other types of film-forming substance. Examples of the third film-forming substance include molybdic acid, tangstic acid, silicic acid, vanadic acid, and metavanadic acid, ions of the above-described acids, and alkali metal salts of the above-described acids.

The above-described film-forming substance, namely, the first film-forming substance, preferably contains P and is in the form of at least one of an oxygen acid of P, an ion of the oxygen acid, and a salt of the oxygen acid.

The film-forming substance which contains phosphorous and is in the above-described form in the finishing agent of the present invention may be referred to below as a fourth film-forming substance to distinguish this substance from other types of film-forming substance. Examples of the fourth film-forming substance include orthophosphoric acid, polyphosphoric acid, metaphosphoric acid, and phosphonic acid, phosphinic acid, ions of the above-described acids, and alkali metal salts of the above-described acids.

The finishing agent further contains a chemical substance containing an element selected from the group consisting of Mo, W, Ce, Co, Ni, Mg, Ca, Mn, Li, Si, Zr, Ti, and V.

The above-described chelating agent contained in the finishing agent of the present invention comprise citric acid.

It is preferable that the finishing agent of the present invention further comprise an organic binder.

It is preferable that the above-described oxidation-resistant layer comprise a chromium-free chemical conversion coating.

It is preferable that the above-described oxidation-resistant layer comprise a hexavalent chromium-free chemical conversion coating containing trivalent chromium.

It is preferable that the above-described oxidation-resistant layer on which an overcoat is formed comprise a chromium-free chemical conversion coating containing Al, Si, and Ti.

A liquid composition for preparing the above-described finishing agent of the present invention is disclosed.

According to a specific aspect, the liquid composition comprises one or more substances selected from the group consisting of an aluminum-containing substance in the form of at least one of a cation, a salt of the cation, and a coordination compound containing the cation, the content of the aluminum-containing substance being 2 to 200 g/l in Al content equivalent; a zinc-containing substance in the form of at least one of a cation, a salt of the cation, and a coordination compound containing the cation, the content of the zinc-containing substance being 5 to 500 g/l in Zn content equivalent; a carboxylic acid chelating agent comprising citric acid which is able to form a coordination compound with an aluminum ion, the molar concentration of the chelating agent being 0.1 to 40 mol/l; and a film-forming substance (the second film-forming substance) containing an element (the second element) selected from the group consisting of Ce, Mn, Ti, and Zr, the film-forming substance being in the form of at least one of a cation, a salt of the cation, and a coordination compound containing the cation, and the molar concentration of the film-forming substance (the second film-forming substance) being 0.1 to 10 mol/l in content equivalent of the selected element.

According to another specific aspect, the liquid composition comprises one or more substances selected from the group consisting of an aluminum-containing substance in the form of at least one of a cation, a salt of the cation, and a coordination compound containing the cation, the content of the aluminum-containing substance being 2 to 200 g/l in Al content equivalent; a zinc-containing substance in the form of at least one of a cation, a salt of the cation, and a coordination compound containing the cation, the content of the zinc-containing substance being 5 to 500 g/l in Zn content equivalent; a carboxylic acid chelating agent comprising citric acid which is able to form a coordination compound with an aluminum ion, the molar concentration of the chelating agent being 0.1 to 40 mol/l; and a film-forming substance (the third film-forming substance) containing an element (the third element) selected from the group consisting of Mo, W, Si, and V, the film-forming substance being in the form of at least one of an oxygen acid of the third element, an anion of the oxygen acid, and a salt of the oxygen acid, and the molar concentration of the film-forming substance (the third film-forming substance) being 0.1 to 10 mol/I in content equivalent of the selected element.

According to still another specific aspect, the liquid composition comprises one or more substances selected from the group consisting of an aluminum-containing substance in the form of at least one of a cation, a salt of the cation, and a coordination compound containing the cation, the content of the aluminum-containing substance being 2 to 200 g/l in Al content equivalent; a zinc-containing substance in the form of at least one of a cation, a salt of the cation, and a coordination compound containing the cation, the content of the zinc-containing substance being 5 to 500 g/l in Zn content equivalent; a carboxylic acid chelating agent comprising citric acid which is able to form a coordination compound with an aluminum ion, the molar concentration of the chelating agent being 0.1 to 40 mol/l; and a film-forming substance (the fourth film-forming substance) containing P, the film-forming substance (the fourth film-forming substance) being in the form of at least one of an oxygen acid of P, an anion of the oxygen acid, and a salt of the oxygen acid, and the content of the film-forming substance being 5 to 450 g/l in P content equivalent.

According to still another aspect of the present invention, there is provided a member as recited in claim 12 comprising a substrate, an oxidation-resistant layer disposed on the substrate, and an overcoat disposed on the oxidation-resistant layer, wherein the overcoat is formed from the finishing agent of the present invention.

It is preferable that the oxidation-resistant layer comprise a hexavalent chromium-free chemical conversion coating.

It is preferable that the oxidation-resistant layer comprise a chromium-free chemical conversion coating.

According to yet another aspect of the present invention, there is provided a member comprising a substrate, an oxidation-resistant layer disposed on the substrate, and an overcoat disposed on the oxidation-resistant layer, wherein the oxidation-resistant layer comprises a hexavalent chromium-free chemical conversion coating containing trivalent chromium, and the overcoat is formed from the finishing agent of the present invention.

According to a further aspect of the present invention, there is provided a process as recited in claim 16 for producing a member comprising a step of preparing a substrate having a surface on which an oxidation-resistant layer is disposed, the oxidation-resistant layer consisting of a hexavalent chromium-free chemical conversion coating, and a step of contacting the finishing agent of the present invention with the oxidation-resistant layer in order to form an overcoat on the oxidation-resistant layer.

A member having highly improved anti-corrosion properties is characterized by having an overcoat formed from the finishing agent of the present invention, in contrast not only to a member having merely an oxidation-resistant layer such as a chemical conversion coating but also to a member having an overcoat containing chromium or an organic overcoat.

The overcoat according to the present invention has a glossier surface than an organic overcoat since the overcoat of the present invention contains aluminum. A member having the overcoat of the present invention has an excellent appearance when an oxidation-resistant layer of the member consists of a black chemical conversion coating, since the color and brilliance of the surface of a treatment layer of the member are improved because of the overcoat according to the present invention.

The coefficient of friction of the overcoat is comparable to the coefficient of friction of the chemical conversion coating, while the coefficient of friction of an organic overcoat is lower than the coefficient of friction of the chemical conversion coating. Therefore, a member having the overcoat of the present invention is preferably used for fastener members such as screws and bolts.

The finishing agent of the present invention does not contain chromium. Therefore, the usage of chromium in a surface treatment layer consisting of a chemical conversion coating containing trivalent chromium and the overcoat of the present invention falls to one-half of the usage of chromium in a surface treatment layer comprising a conventional overcoat containing trivalent chromium.

When the chemical conversion coating does not contain trivalent chromium, i.e., when a so-called chromium-free chemical conversion coating is used, the surface treatment layer becomes entirely chromium-free. When the entirely chromium-free surface treatment layer is applied to all the fastener members such as screws and bolts used in a vehicle, the reduction in the amount of chromium reaches several grams. Thus, the present invention can provide a vehicle having a markedly reduced environmental impact.

### Best Mode for Carrying Out the Invention

Detailed explanations of a finishing agent of the present invention, a liquid composition for preparing the finishing agent, a member having an overcoat formed from the finishing agent, and a process producing the member are described below.

### 1. Finishing Agent

The finishing agent of the present invention is as recited in claim 1, it comprises an aluminum-containing substance in the form of at least one of a cation, a salt of the cation, and a coordination compound containing the cation; a zinc-containing substance in the form of at least one of a cation, a salt of the cation, and a coordination compound containing the cation; a chelating agent which is able to form a coordination compound with an aluminum ion; and a film-forming substance (the first film-forming substance) containing a first element selected from the group consisting of P, Mo, W, Ce, Mn, Si, Ti, Zr, and V.

When the finishing agent contacts the surface of a member having a surface consisting of an oxidation-resistant layer such as a hexavalent chromium-free chemical conversion coating and the member is dried after the contact, a coating, i.e., an overcoat, is formed on the oxidation-resistant layer. Although the mechanism of forming the coating has not been clarified, it is thought that as the solvent having water as the main component is volatilized during a drying procedure, aluminum and zinc contained in the finishing agent make a crosslinked structure, which contains a bonding sub-structure consisting of metal-oxygen-metal, and that a coating is formed having a three-dimensional network structure based on the crosslinked structure.

The first film-forming substance is thought to act as a metal or a metal and oxygen in the bonding sub-structure, or to form a poorly-soluble salt such as zinc phosphate and deposit on the oxidation-resistant layer to promote formation of an overcoat or improve properties of a surface treatment layer, such as anti-corrosion properties.

When the oxidation-resistant layer consists of a chemical conversion coating, a chemical and/or physical interaction may occur between a component of the finishing agent of the present invention and a material composing the chemical conversion coating. It is thought that high adhesion is then achieved between the overcoat and the chemical conversion coating.

Since the finishing agent of the present invention contains a metallic component but is chromium-free, the finishing agent overcomes problems which are possessed by a conventional chromium-free finishing agent such as a resin-type finishing agent and a silica-type finishing agent. Examples of the problems include the problem that the fastening torque of a member having an overcoat is low, the problem that anti-corrosion properties of the member are not sufficient, and the problem that appearance is not good, due, for example, to white powders observed on the surface of the member.

Components of the finishing agent, a process of preparing the finishing agent, etc. are explained below.

### (1) Aluminum-containing Substance

The finishing agent of the present invention which is as recited in claim 1 contains an aluminum-containing agent which is a chemical substance containing aluminum and which exists in the finishing agent of the present invention in the form of at least one of a cation, namely, an aluminum ion, a salt of the cation, e.g., aluminum phosphate, and a coordination compound containing the cation, e.g., a citric acid complex of aluminum.

Aluminum from the aluminum-containing substance is a constituent of an overcoat. Aluminum imparts properties such as a glossy appearance, high hardness, excellent anti-corrosion properties, and a sufficient coefficient of friction to the overcoat of the present invention.

When the content is excessively low, it is impossible to obtain an overcoat having the above-described good properties. As a basic tendency, as the content of the aluminum-containing substance increases, it becomes easier to form an overcoat, and the formed overcoat has improved properties such as anti-corrosion properties. Therefore, there is not a critical upper limit on the content of the aluminum-containing substance. When the content of the aluminum-containing substance is excessively high, the content of the chelating agent used to stabilize aluminum must be high, and it becomes difficult to preserve the finishing agent in the form of a concentrated liquid. As described below, the content the concentrated liquid is normally 5 to 20 times as much as the content of the finishing agent. In addition, when the content of the aluminum-containing substance is excessively high, advantages derived from increasing the content, such as a reduction in the volume at the time of storage and delivery costs become smaller than the disadvantages caused by increasing the content. From the viewpoint of achieving a balance among high productivity, excellent properties of the overcoat, and high economic efficiency, the content of the aluminum-containing substance is 1.5 to 14 g/l in Al content equivalent.

There is no limitation on the type of the aluminum-containing substance as long as the solubility of the substance in the polar solvent, the main portion of which is water, is sufficient in use. Preferable examples of the aluminum-containing substance include aluminum sulfate, aluminum nitrate, aluminum chloride, sodium aluminate, polyaluminum chloride, aluminum phosphate, and aluminum potassium sulfate. It is efficient for the aluminum-containing substance to be supplied in the form of a specific oxygen acid such as aluminum phosphate, since the substance also works as a film-forming substance.

### (2) Zinc-containing Substance

The finishing agent of the present invention which is as recited in claim 1 contains a zinc-containing agent which is a chemical substance containing zinc and which exists in the finishing agent of the present invention in the form of at least one of a cation, namely, a zinc ion, a salt of the cation, e.g., zinc chloride, and a coordination compound containing the cation, e.g., a citric acid complex of zinc.

When the content is excessively low, the content becomes insufficient for the overcoat to be reinforced by zinc, and it becomes difficult to obtain an overcoat having the above-described excellent properties.

For reasons similar to the case of the aluminum-containing substance, the content of the zinc-containing substance does not have a critical upper limit. When the content of the zinc-containing substance is excessively high, the content of the aluminum in the overcoat relatively falls and the possibility of problems such as a deterioration in appearance increases. From the viewpoint of achieving a balance among high productivity, excellent properties of the overcoat, and high uniformity of the overcoat, the content of the zinc-containing substance is 3 to 20 g/l in Zn content equivalent.

There is no limitation on the type of the zinc-containing substance as long as the solubility in the polar solvent, the main portion of which is water, is sufficient in use. Preferable examples of the zinc-containing substance include zinc chloride and zinc oxide.

### (3) Chelating Agent

The finishing agent of the present invention contains a chelating agent which is as recited in claim 1, and which is able to form a coordination compound with an aluminum ion so as to increase the stability of the aluminum ion in the finishing agent.

Examples of the above-described chelating agent include an aminopolycarboxylic acid chelating agent, an aromatic or aliphatic carboxylic acid chelating agent, an amino acid chelating agent, an ethercarboxylic acid chelating agent, a phosphonic acid chelating agent, a phosphoric acid chelating agent, a hydroxycarboxylic acid chelating agent, a polyelectrolyte chelating agent, which includes an oligomer chelating agent, a polyalcohol, dimethylglyoxime, ascorbic acid, thioglycolic acid, phytic acid, glyoxylic acid, and glyoxal. These chelating agents may be in the form of a free acid, or a salt such as a sodium salt, a potassium salt, and an ammonium salt. Further, the chelating acid may be in the form of a hydrolyzable ester delivative.

Examples of an aminopolycarboxylic acid chelating agent include ethylenediaminetetraacetatic acid (EDTA), ethylenediaminediacetatic acid, hydroxyethylenediaminetriacetatic acid (HEDTA), dihydroxyethylenediaminediacetatic acid (DHEDDTA), nitrilotriacetic acid (NTA), dihydroxyethyliminodiacetic acid (HIDA), beta alaninediacetic acid, cyclohexanediaminetetraacetic acid, iminodiacetic acid, n-(2-hydroxyethyl)iminodiacetic acid, diethylenetriaminepentaacetic acid, n-(2-hydroxyethyl)ethylenediaminetriacetatic acid, glycoletherdiaminetetraacetic acid, N,N-bis(carboxymethyl)- glutamic acid, N,N-bis(carboxymethyl)-asparaginic acid, N,N-bis(carboxymethyl)-methylglicine, iminodisuccinic acid, N,N-bis(carboxymethyl)-serine, hydroxyiminodisuccinic acid, dihydroxyethylglycine, asparaginic acid, glutamic acid, salts of the above-described acids, and derivatives such as an ester of the above-described acids.

Examples of an aromatic or aliphatic carboxylic acid chelating agent include oxalic acid, malonic acid, succinic acid, glutaric acid, adipic acid, pimelic acid, sebacic acid, azelaic acid, itaconic acid, aconitic acid, pyruvic acid, gluconic acid, pyromellitic acid, benzopolycarboxylic acid, cyclopentatetracarboxylic acid, salicylic acid, acetylsalicylic acid, hydroxybenzoic acids, aminobenzoic acids, which include anthranilic acid, phthalic acid, fumaric acid, trimellitic acid, gallic acid, hexahydrophthalic acid, salts of the above-described acids, and derivatives of the above-described acids.

Examples of an amino acid chelating agent include glycine, serine, alanine, lysine, cystine, cysteine, ethionine, tyrosine, methionine, salts of the above-described acids, and derivatives of the above-described acids.

Examples of an ether carboxylic acid chelating agent include carboxymethyltartronate, carboxymethyloxysuccinate, oxydisuccinate, tartratemonosuccinate, tartratedisuccinate, salts of the above-described acids, and derivatives of the above-described acids.

Examples of a hydroxycarboxylic acid chelating agent include malic acid, citric acid, glycolic acid, glyconic acid, glucoheptonic acid, tartaric acid, lactic acid, salts of the above-described acids, and derivatives of the above-described acids.

The chelating agent may consist of one or more type of chemical substance. The chelating agent is a carboxylic acid chelating agent, comprising citric acid. A carboxylic acid chelating agent can form a coordination compound with an aluminum ion, and hence it becomes easy for the carboxylic acid chelating agent to achieve a balance between increasing the stability of the finishing agent and obtaining an overcoat having excellent properties.

The relationship between the molar content of the chelating agent (when the chelating agent consists of plural types of chemical substance, the total molar content of the substances) and the molar content of the aluminum-containing substance is not limited. The molar content of the chelating agent should be determined from the viewpoint of increasing the stability of an aluminum ion in the finishing agent.

### (4) Film-forming substance

The finishing agent of the present invention contains a film-forming substance, namely, a first chemical substance containing a first element selected from the group consisting of P, Mo, W, Ce, Mn, Si, Ti, Zr, and V.

The film-forming substance is thought to form an overcoat by forming a crosslinked structure with an aluminum ion and a zinc ion, or by forming a low-solubility salt containing the first element. The finishing agent of the present invention can form an overcoat having excellent anti-corrosion properties due to containing the film-forming substance as well as the aluminum-containing substance and the zinc-containing substance.

It is preferable that the content of the film-forming substance be 0.1 to 200 g/I. When the content is excessively low, the content becomes insufficient for an overcoat to be reinforced by the film-forming substance, and thus it becomes difficult to obtain an overcoat having the above-described excellent properties.

For reasons similar to those given in the case of the aluminum-containing substance or the zinc-containing substance, there is no critical upper limit on the content of the film-forming substance. When the content of the film-forming substance is excessively high, the content of the aluminum in the overcoat relatively falls and there is an increased possibility of problems such as a deterioration in appearance. Therefore, the content of the film-forming substance is preferably at most 200 g/l. From the viewpoint of obtaining a balance among high productivity, excellent properties of the overcoat, and high uniformity of the overcoat, the content of the film-forming substance is preferably 0.5 to 50 g/I.

When the film-forming substance contains aluminum or zinc, it can also act as the aluminum-containing substance or the zinc-containing substance. In this case, one chemical substance can work as a plurality of types of the essential components of the finishing agent of the present invention. Therefore, the number of types of chemical substances constituting the essential components of the finishing agent of the present invention becomes smaller based on the properties of the chemical substances.

The film-forming substance, namely, the first film-forming substance can be classified as follows according to the action of the first element in the overcoat.

### i) Second Film-forming substance

When the film-forming substance contains a second element selected from the group consisting of Ce, Mn, Ti, and Zr, and is in the form of at least one of a cation of the second element, a salt of the cation, and a coordination compound containing the cation, namely, when the film-forming substance can be defined as the second film-forming substance, it is thought that the second element becomes one of the components of the overcoat, that the second element acts as the part of the metal in the bonding sub-structure of metal-oxygen-metal as does aluminum or zinc, and that the second element contributes to an increase in the hardness of the overcoat. It is also thought that the second film-forming substance promotes the formation of the crosslinked structure in the overcoat.

There is no limitation on the type of the second film-forming substance as long as its solubility in the polar solvent, the main portion of which is water, is sufficient in use. Examples of the second film-forming substance include salts of inorganic acids such as nitrates, chlorides, and sulfates of the above-described second element.

### ii) Third Film-forming substance

When the film-forming substance contains a third element selected from the group consisting of Mo, W, Si, and V, and is in the form of at least one of an oxygen acid of the third element, an anion of the oxygen acid, and a salt of the oxygen acid, namely, when the film-forming substance can be defined as the third film-forming substance, it is thought that an oxygen acid of the third element forms an insoluble salt with aluminum ions and zinc ions such as zinc molybdate, zinc silicate, and zinc vanadate. The formed insoluble salt is thought to be contained in the overcoat and to contribute to an increase in the hardness of the overcoat. It is also thought that the third film-forming substance promotes formation of the crosslinked structure in the overcoat as does the second film-forming substance.

There is no limitation on the type of the third film-forming substance as long as its solubility in the polar solvent, the main portion of which is water, is sufficient in use. Examples of the third film-forming substance include alkali metals, e.g., lithium and sodium, salts of oxygen acids of the third element, and colloidal silica.

### iii) Fourth Film-forming substance

When the film-forming substance contains phosphorus and it is in the form of at least one of an oxygen acid of P, an anion of the oxygen acid, and a salt of the oxygen acid, namely, when the film-forming substance can be defined as the fourth film-forming substance, it is thought that an oxygen acid of P forms an insoluble salt with an aluminum ion and a zinc ion as in the case of the third film-forming substance. The formed insoluble salt is thought to be contained in the overcoat and to contribute an increase in the hardness of the overcoat.

There is no limitation on the type of the fourth film-forming substance as long as its solubility in the polar solvent, the main portion of which is water, is sufficient in use. Examples of the fourth film-forming substance include orthophosphoric acid, phosphorous acid, tripolyphosphoric acid, condensed phosphoric acid, and metal salts of these acids. From the viewpoint of the stability of the finishing agent, orthophosphoric acid is preferable.

The content of the fourth film-forming substance is preferably at least 0.1 g/l in P content equivalent. When the content is excessively low, it is impossible to obtain effects derived from the fourth film-forming substance. In general, the properties of the overcoat improve as the content of the fourth film-forming substance increases. Therefore, there is no critical upper limit on the content of the fourth film-forming substance. When the content of the fourth film-forming substance is excessively high, the finishing agent or the concentrated liquid of the finishing agent may increase in viscosity, and the possiblity of problems such as a decrease in operability and nonuniform formation of the overcoat may develop. Therefore, the content of the fourth film-forming substance is preferably at most 60 g/l in P content equivalent. From the viewpoint of achieving a balance among high productivity, excellent properties of the overcoat, and high uniformity of the overcoat, the content of the fourth film-forming substance is preferably 0.5 to 35 g/l in P content equivalent.

The ratio of the molar content of the fourth film-forming substance in P content equivalent to the molar content of the aluminum-containing substrate in Al content equivalent is not limited. It is preferable that the ratio be 0.1 to 30 from the viewpoint of balancing high productivity, excellent properties of the overcoat, and high uniformity of the overcoat. From the above-described viewpoint, the molar content of the fourth film-forming substance in P content equivalent to the sum of the molar content of the aluminum-containing substrate in Al content equivalent and the molar content of the zinc-containing substrate in Zn content equivalent is preferably 0.1 to 15.

When the fourth film-forming substance is contained in the finishing agent of the present invention, it is preferable that the finishing agent further contain a chemical substance containing an element selected from the group consisting of Mo, W, Ce, Co, Ni, Mg, Ca, Mn, Li, Si, Zr, Ti, and V. The chemical substance may be referred to below as a film-forming additive so as to distinguish it from other types of chemical substances. When the film-forming additive is contained, the hardness, anti-corrosion properties, appearance, and the like of the overcoat are improved depending on the characteristics of the film-forming additive.

Examples of the film-forming additive include metal salts of inorganic acids such as nickel chloride, cobalt nitrate, titanium chloride, and titanyl sufate; alkali metal salts and ammonium salts of oxygen acids such as molybdic acid, tangstic acid, titanic acid, silicic acid, and vanadic acid; hydrolyzable organometal compounds such as organotitanium compounds; organosilicon compounds such as tetramethoxysilane and tetraethoxysilane; organosilicon compounds having a organofunctional group such as a compound having the general formula of Y-Si(OR)₃, where Y is a functional group such as an amino group, an epoxy group, and a vinyl group, and R is an alkyl group; and oxides such as silica, especially colloidal silica, and zircon. It is preferable for the finishing agent to contain sodium vanadate because an overcoat formed from a finishing agent containing sodium vanadate stably has good anti-corrosion properties.

The preferable content of the film-forming additive depends on the characteristics of the film-forming additive and the required properties of the overcoa. For example, the content of the above-described sodium vanadate is approximately 0.1 to 30 g/l.

Some chemical substances categorized as a film-forming additive can be also categorized as a film-forming substance. When the finishing agent of the present invention contains the fourth film-forming substance, this substance is defined as a film-forming additive.

### (5) Organic Binder

The finishing agent of the present invention may further contain an organic binder which may contain an inorganic component as well as an organic component. The overcoat formed from the finishing agent containing the organic binder has improved anti-corrosion properties and the like.

When the organic binder comprises an organic component, the organic component may be any one or more of a water-soluble resin, an aqueous dispersion, and a water-insoluble resin.

The water-soluble resin may consist of a water-soluble polymer such as polyvinyl alcohol, polyacrylic acid and polyvinylpyrrolidone. The water-soluble resin may consist of a water-soluble monomer or oligomer in the finishing agent, which can form a polymer by polymerization caused by heat applied so as to volatilize the solvent contained in the finishing agent or light radiated from the outside.

The aqueous dispersion contains a resin or a precursor of the resin which can continue to disperse in water for a prescribed period even in a resting state. Examples of the aqueous dispersion include an acryl resin, a urethane resin, an ethylene resin, an epoxy resin, and precursors of the above-described resins.

The water-insoluble resin is a resin which can continue to disperse in water only when the water is agitated so as to prevent sedimentation of the resin. Examples of the water-insoluble resin include an acryl resin, a urethane resin, an ethylene resin, an epoxy resin, and a butyral resin.

The organic binder may contain a thickening agent, such as methylcellulose or hydroxyethylcellulose.

Examples of an organic binder containing an inorganic component as well as an organic component include organosilicon compounds like silane coupling agents such as triethoxysilane and γ-glycidyloxypropyltrimethoxysilane, and organotitanium compounds such as titaniumethylacetoacetate.

The content of the organic binder is preferably 0.1 to 20 g/l.

### (6) Nitrogen Compound

The finishing agent of the present invention may contain a nitrogen compound. The nitrogen compound can improve the appearance of the overcoat especially in a portion where the solvent of the finishing agent was hard to volatilize.

Examples of the nitrogen compound include organic nitrogen compounds such as urea and amines. Examples of a preferable nitrogen compound include urea, ammonium salts, and nitrates. An especially preferable content of the above-described preferable nitrogen compound is 0.5 to 50 g/l.

### (7) Other Additives

The finishing agent of the present invention may contain a surfactant as necessary. The finishing agent may contain a micropowder of graphite, molybdenum disulfide, a fluororesin, and the like in order to improve lubricity when the finishing agent is used for lubrication. The finishing agent may contain glycerin when used on a screw, a bolt, and the like where a certain fastening torque is required. Glycerin may be contained in the finishing agent, not only for controlling the coefficient of friction of the overcoat, but also for improving the appearance of the overcoat, and specifically for improving the gloss of the surface of the overcoat. The content of glycerin for this purpose is typically 2 to 50 g/l.

There is no limitation on the type of the surfactant. Examples of the surfactant include an anionic surfactant, a cationic surfactant, a nonionic surfactant, an ampholytic surfactant, and a semipolar surfactant.

Examples of an anionic surfactant include polyoxyethylene alkyl sulfates, alkyl or alkenyl sulfates, salts of polyoxyethylene alkyl or alkenyl sulfic acid esters, alkyl benzene sulfonates, alkane sulfonates, alkyl or alkenyl ethercarboxylates, alpha-sulfo aliphatic acid derivatives, alpha-olefine sulfonates, salts of alpha-sulfo aliphatic acid alkylesters, sulfosuccinates, salts of alkylphosphoric acid esters, natural aliphatic acid soaps, alkyl ethoxysulfates, amidoethercarboxylic acids, and aminoacid anion surfactants.

Examples of a cationic surfactant include di-long chain alkyl dimethyl quaternary ammonium salts, long chain alkyl dimethyl quaternary ammonium salts, alkylamine hydrochlorides, and quaternary ammonium salts.

Examples of a nonionic surfactant include polyoxyalkylenealkylethers, aliphatic acid alkanolamides, polyoxyethylenesorbitan esters, sorbitan esters, sorbitol esters, sucrose aliphatic acid esters, methylglucoside esters, methylmannoside esters, ethylglucoside esters, N-methylglucamides, cyclic N-methylglucamides, alkylglucosides, alkyl polyglucosides, alkylglycerylethers, polyoxyethylenealkylethers, sorbitan aliphatic acid esters, polyoxyethyleneacyl esters, aliphatic acid glycoside esters, aliphatic acid methylglycoside esters, and alkylmethylglucamides.

Examples of an ampholytic surfactant include carboxybetaines, aminocarboxylates, alkylsulfobetaines, hydroxyalkylsulfobetaines, alkylimidazoliumbetaines, alkylbetaines, and alkylamidopropylbetaines.

Examples of a semipolar surfactant include alkylamineoxides, alkylamidoamineoxides, and alkylhydroxyamineoxides.

An anionic surfactant, a nonionic surfactant, and an ampholytic surfactant are preferable. Specific examples of a preferable surfactant include sodium salts of alkylether sulfuric acid esters, sodium salts of alkylbenzene sulfonic acids, polyoxyethylenealkylethers, coconut fatty acid alkanolamides, and aliphatic acid amidopropylbetaines.

The surfactant in the finishing agent may consist of one or more type of surfactant. The content of the surfactant depends on other components of the finishing agent or, on the required qualities of the overcoat formed from the finishing agent. In general, the content of the surfactant is preferably 0.1 to 50 g/l. A particularly preferable content of the surfactant is 1 to 10 g/I. When the content is less than 0.1 g/l, it is difficult to obtain the effects of the surfactant. When the content is more than 50 g/l, the effects are almost saturated, and the stability of the finishing agent may be spoiled by foam formation.

### (8) pH

The finishing agent of the present invention is a neutral to acidic aqueous liquid composition because the agent contains aluminum ions or zinc ions. Therefore, the pH of the finishing agent is at most about 7. The specific pH of the finishing agent is determined depending on the types of the chelating agent or other additives, such as the organic binder. The pH of the finishing agent can be adjusted by adding arbitrary acids and/or bases. Examples of such acids and bases include sulfuric acid, nitric acid, hydrochloric acid, acetic acid, sodium hydroxide, potassium hydroxide, and ammonia.

### (9) Solvent

The solvent of the finishing agent of the present invention consists of a polar liquid mainly consisting of water. Examples of a component of the solvent except for water include a polar organic compound in the form of a liquid such as an alcohol or a ketone. The content of the polar organic compound in the solvent is preferably at most about 10 % of the amount of water in the solvent.

### 2. Substrate and Oxidation-resistant Layer

### (1) Substrate

There is no limitation on either the material or the shape of the substrate on which the overcoat is formed from the finishing agent of the present invention.

Any material can be used for the substrate as long as the oxidation-resistant layer specifically described below can be formed on the substrate. When the oxidation-resistant layer consists of a chemical conversion coating, the process of forming the coating includes a phenomenon of eroding a metal on the surface of the substrate and a phenomenon of depositing a metal contained in a solution for the chemical conversion coating. Therefore, it is preferable that the surface of the substrate comprise a metal.

The shape of the substrate may be flat like that of a steel sheet. The substrate may be a member which has undergone secondary fabrication. Examples of secondary fabrication include all processing methods defined in JIS B 0122 such as plastic forming and machining. Specific examples of a member which has undergone secondary fabrication include a fastener part such as a screw or a bolt, a pressed part, and a forged part. The size of the substrate is arbitrary. The substrate may be as large as a construction material, or as small as a part for use in a watch. There is no limitation on the application of the overcoat formed from the finishing agent of the present invention. Examples of applications include transport machines such as vehicles and vessels, household appliances, building hardware, and electric and electronic equipment.

### (2) Oxidation-resistant Layer

There is no limitation on the shape or the constitution of the oxidation-resistant layer on which the overcoat according to the present invention is formed, as long as the oxidation-resistant layer can prevent chemical substances, which oxidize or form a hydroxide of a material making up the substrate, from reaching the substrate. Examples of such chemical substances include oxygen, water, protons, and hydroxide ions.

The oxidation-resistant layer may consist of the chemical conversion coating specifically described below. The oxidation-resistant layer may be formed by a wet process or a dry process to deposit a material which can prevent the formation of an oxide or a hydroxide with.

Specific examples of a material making up the oxidation-resistant layer include a material having a siloxane bond (Si-O) such as silica and an organosilicon compound, and an oxide and/or nitride of metals such as Ti, W, and Al.

When the overcoat according to the present invention contains a material which is at least one of the components of the oxidation-resistant layer and/or a material which can form a strong chemical bond with a component of the oxidation-resistant layer, adhesion between the overcoat and the oxidation-resistant layer is expected to increase. Therefore, it is preferable that the finishing agent of the present invention contain such a material from the viewpoint of improving the anti-corrosion properties of the overcoat.

### (3) Chemical Conversion Coating

A chemical conversion coating is explained below as a typical example of the oxidation-resistant layer.

Although there is no limitation on the composition of the chemical conversion coating, it is necessary for the coating to be free from hexavalent chromium because of the recent emphasis on environmental conservation. The chemical conversion coating may be formed from a chemical solution for chemical conversion treatment containing trivalent chromium, or a solution not containing trivalent chromium. Considering the future trend of environmental conservation, it is preferable that the chemical conversion coating not contain trivalent chromium, namely, that the chemical conversion coating be chromium-free.

Since the finishing agent of the present invention does not contain trivalent chromium, when the finishing agent is applied to a chromium-free chemical conversion coating, the surface treatment layer becomes totally free from chromium.

Examples of a solution for chemical conversion treatment containing trivalent chromium include the following solutions, which are products of Yuken Industry Co., Ltd.

METASU-YFB, which is a solution for forming a black chemical conversion coating on an electrogalvanized product.

METASU-YFK, which is a solution for forming a black chemical conversion coating on a Zn-Fe electroplated product.

METASU-YFA, which is a solution for forming a silvery chemical conversion coating on an electrogalvanized product.

METASU-CKN, which is a solution for forming a black chemical conversion coating on a Zn-high content of Ni electroplated product.

METASU-CYN, which is a solution for forming a silvery chemical conversion coating on a Zn-high content of Ni electroplated product.

Examples of a chromium-free solution for chemical conversion treatment include an acidic solution containing an aluminum ion, a silicon-containing compound selected from a silicate and silica, a titanium-containing compound, a nitrate ion, and citric acid. A chemical conversion coating formed from this solution contains aluminum, silicon, and titanium. Since the overcoat according to the present invention also contains aluminum, a surface treatment layer consisting of the chemical conversion coating and the overcoat according to the present invention has especially excellent anti-corrosion properties.

The finishing agent of the present invention often has a chemical and/or physical interaction with a component of a chemical conversion coating. An overcoat formed from the finishing agent may have especially excellent anti-corrosion properties because of the interaction. Specifically, when a finishing agent of the present invention contains the above-described fourth film-forming substance and the finishing agent is applied to a chemical conversion coating containing trivalent chromium, an overcoat formed from the finishing agent has especially excellent anti-corrosion properties.

### 3. Process of Preparing the Finishing Agent and Process of Producing the Overcoat

### (1) Process of Preparing the Finishing Agent

The finishing agent of the present invention can be prepared by adding the above-described components or a concentrated liquid specifically described below to a solvent in the form of a liquid with stirring so that the added material is sufficiently dissolved or dispersed. There is no limitation on the order of adding components.

### (2) Process of Producing the Overcoat

The overcoat according to the present invention is produced by contacting the finishing agent of the present invention with the oxidation-resistant layer, e.g., a chemical conversion coating located on the substrate for a prescribed period, and drying the oxidation-resistant layer, on the surface of which the finishing agent deposits, after contacting the finishing agent with the oxidation-resistant layer.

The process of contacting the finishing agent with the oxidation-resistant layer (the coating process) can be performed by any conventional method such as roll coating, spraying, brush-painting, spin-coating, and dipping. The specific method used for the coating process can be selected based on the substrate. It is preferable that the thickness of the overcoat after drying be in the range of a few nm to about 1 micrometer.

There is no limitation on the temperature of the finishing agent during the coating process. The coating process may be performed at room temperature, i.e., around 25 degrees C. The temperature may be elevated up to 60 degrees C so as to improve the reaction of forming the overcoat. The preferable temperature is 10 to 40 degrees C.

The period of contacting the finishing agent with the oxidation-resistant layer, e.g., a dipping period, is preferably 3 to 60 seconds. When the period is excessively short, there is an increased risk of insufficient formation of the overcoat. When the period is excessively long, productivity decreases because the increase in thickness of the overcoat has become almost saturated. The preferable period is set based on the temperature of the finishing agent. One example of a preferable period is 5 to 10 seconds when the temperature of the finishing agent is 25 degrees C.

There is no limitation on the specific method, the temperature, and the length of the drying process as long as the solvent of the finishing agent can be volatilized during the drying process. The substrate after the coating process may be stored in a temperature-controlled oven. The substrate after the coating process may be subjected to centrifugation. Hot air may be supplied to the oxidation layer on the surface of which the finishing agent is deposited. According to one example of a drying process performed with a temperature-controlled oven, the period for drying is 10 minutes at 80 degrees C.

### 4. Concentrated Liquid

It is preferable to prepare a liquid composition which contains at least one of the components of the finishing agent as a concentrated liquid for the finishing agent. Since the content of the component in the liquid composition is 2 to 200 times and typically 5 to 20 times as much as the content of the component in the finishing agent, a concentrated liquid can reduce the number of operations involved in preparing each component of the finishing agent. Furthermore, a concentrated liquid is easy to store because the volume of the concentrated liquid is less than the volume of the finishing agent.

The upper limit on the content of a component of the concentrated liquid is determined in consideration of the solubility of the component. Specifically, the upper limit on the content of a component of the concentrated liquid consisting of one or more of the aluminum-containing substance, the zinc-containing substance, the chelating agent, and the film-forming substance, and, as necessary, additives such as the film-forming additive, the nitrogen compound, and the surfactant, is determined in consideration of the solubility of the component.

The content of each component can be as follows.

A liquid composition comprising one or more substances selected from the group consisting of the aluminum-containing substance having a content of 2 to 200 g/l in Al content equivalent, the zinc-containing substance having a content of 5 to 500 g/l in Zn content equivalent, the chelating agent, which is able to form a coordination compound with an aluminum ion, having a molar concentration of 0.1 to 40 mol/l, and the second film-forming substance having a molar concentration of 0.1 to 10 mol/l in the second element content equivalent can be a concentrated liquid for preparing the finishing agent of the present invention which contains the second film-forming substance. The finishing agent of the present invention can be prepared by mixing one or more of the liquid compositions and, as necessary, other additives, and diluting the mixture an appropriate number of times.

A liquid composition comprising one or more substances selected from the group consisting of the aluminum-containing substance having a content of 2 to 200 g/l in Al content equivalent, the zinc-containing substance having a content of 5 to 500 g/l in Zn content equivalent, the chelating agent, which is able to form a coordination compound with an aluminum ion, having a molar concentration of 0.1 to 40 mol/l, and the third film-forming substance having a molar concentration of 0.1 to 10 mol/l in the third element content equivalent can be a concentrated liquid for preparing the finishing agent of the present invention which contains the third film-forming substance. The finishing agent of the present invention can be prepared by mixing one or more of the liquid compositions and, as necessary, other additives, and diluting the mixture an appropriate number of times.

A liquid composition comprising one or more substances selected from the group consisting of the aluminum-containing substance having a content of 2 to 200 g/l in Al content equivalent, the zinc-containing substance having a content of 5 to 500 g/l in Zn content equivalent, the chelating agent, which is able to form a coordination compound with an aluminum ion, having a molar concentration of 0.1 to 40 mol/l, and the fourth film-forming substance having a content of 5 to 450 g/l in phosphorus content equivalent can be a concentrated liquid for preparing the finishing agent of the present invention which contains the fourth film-forming substance. The finishing agent of the present invention can be prepared by mixing one or more of the liquid compositions and, as necessary, other additives, and diluting the mixture an appropriate number of times.

Effects of the present invention will be explained below with respect to examples. However, the invention should not be considered as being in any way limited to these examples.

### Example 1

### (1) Preparation of a Test Plate

SPCC steel plates (100 mm x 50 mm x 0.8 mm thick, surface area of 1 dm²) were cleaned by a conventional cleaning process. A zinc electroplated layer or a zinc-iron electroplated layer was formed on the surface of each steel plate after cleaning. The forming conditions for each electroplated layer were as follows.

The zinc electroplated layer was plated in a zincate bath prepared from METASU-ZST, which is a product of Yuken Industry Co., Ltd. The thickness of the layer was 8 micrometers.

The zinc-iron electroplated layer was plated in a zincate bath prepared from METASU-AZ, which is a product of Yuken Industry Co., Ltd. The co-deposition ratio of iron in the layer was 0.4 % by weight, and the thickness of the layer was 8 micrometers.

### (2) Chemical Conversion Treatment

Each of the steel plates on which an electroplated layer was formed was immersed for 10 seconds in a nitric acid solution, so as to activate the surface of the electroplated layer, the nitric acid being prepared in such a way that 3 ml of a 67.5% nitric acid solution were diluted by 1 liter of water. Each of the activated steels plates was washed for 10 seconds with water at room temperature (25 degrees C). Each of the steel plates after washing was subjected to a chemical conversion treatment selected from the treatments listed in TABLE 1 to form a chemical conversion coating. Each of the steel plates on which a chemical conversion coating was formed was washed for 10 seconds with water at room temperature (25 degrees C).

**TABLE 1**

| Type of chemical conversion treatment | Solution of chemical conversion treatment | | pH | Temperature of solution (degrees C) | Immersion period (seconds) |
|---|---|---|---|---|---|
| A | METASU YFB-ZA/ZB, which is produced by Yuken Industry Co., Ltd. | | 1.8 | 40 | 60 |
| | Standard bath composition | | | | |
| | The content of trivalent chromium: 1.5g/L | | | | |
| B | METASU YFB-ZA/ZB, which is produced by Yuken Industry Co., Ltd. | | 2.0 | 40 | 60 |
| | Standard bath composition | | | | |
| | The content of trivalent chromium: 1.5g/L | | | | |
| C | Aluminum nitrate | 20g/L | 2.0 | 20 | 60 |
| | Lithium silicate | 20g/L | | | |
| | Solution of titnium sulfate (25%) | 10g/L | | | |
| | Citric acid | 10g/L | | | |
| | Oxalic acid | 1g/L | | | |

### (3)Finishing Treatment

After the washing and without being dried, most of the steel plates were subjected to the finishing treatment shown in TABLE 2 or TABLE 3. Each of the steel plates after the finishing treatment was dried for 10 minutes at 80 degrees C to obtain test plates each having an overcoat. Some of the steel plates after washing were not subjected to a finishing treatment. These steel plates were air-dried and used as test plates. The finishing treatment agents of type a, b and e in table 2 are not according to the invention as defined in claim 1, they are comparative examples.

**TABLE 2**

| Type of finishing treatment | | a | b | c | d | e | f | g | h | i | j |
|---|---|---|---|---|---|---|---|---|---|---|---|
| Al | (g/l) | 1.0 | 1.0 | 5.0 | 5.0 | 5.0 | 13.5 | 13.5 | 3.5 | 13.5 | 13.5 |
| Zn | (g/l) | 3.3 | 4.0 | 7.0 | 4.0 | 12.0 | 12.0 | 7.0 | 12.0 | 10.0 | 17.0 |
| P | (g/l) | 10.0 | 31.0 | 10.0 | 31.0 | 7.0 | 7.0 | 6.0 | 10.0 | 7.0 | 15.0 |
| citric acid | (g/l) | 31.0 | | 48.0 | 10.0 | | 30.0 | 85.0 | 35.0 | 50.0 | 75.0 |
| malic acid | (g/l) | 7.0 | 24.0 | | | 25.0 | 24.0 | | 4.0 | | |
| malonic acid | (g/l) | | | | | 14.0 | | | | 6.0 | |
| Ti | (g/l) | 1 | | | | | | | | | |
| V | (g/l) | | | 1 | | | | | 1 | | |
| Si | (g/l) | | | | 1 | | | | | | |
| Mg | (g/l) | | | | | | | | 1 | 1 | |
| pH | | 4.0 | 4.8 | 6.0 | 4.5 | 5.0 | 5.2 | 6.5 | 4.8 | 4.5 | 5.0 |
| Temperature of solution | (°C) | 25 | 25 | 25 | 25 | 25 | 25 | 25 | 25 | 25 | 25 |
| Immersion period | (s) | 5 | 5 | 5 | 5 | 5 | 5 | 5 | 5 | 5 | 5 |

The values in the rows for Al and Zn indicate the content of polyaluminum chloride as an aluminum-containing substance in Al content equivalent and the content of zinc oxide as a zinc-containing substance in Zn content equivalent, respectively.

The values in the row for P of indicate the content of orthophosphoric acid as a fourth film-forming substance in P content equivalent.

The values in the row for Ti of indicate the content of a solution of titanium (IV) chloride as a film-forming additive in Ti content equivalent.

The values in the row for V of indicate the content of sodium metavanadate as a film-forming additive in V content equivalent.

The values in the row for Si of indicate the content of lithium silicate as a film-forming additive in Si content equivalent.

The values in the row for Mg of indicate the content of magnesium nitrate as a film-forming additive in Mg content equivalent.

**TABLE 3**

| Type of finishing treatment | Solution of chemical conversion treatment | | pH | Temperature of solution (degrees C) | Immersion period (seconds) |
|---|---|---|---|---|---|
| | Component | Content (g/l) | | | |
| k | Cr³⁺ | 5 | 4.0 | 40 | 10 |
| | Zn²⁺ | 10 | | | |
| | PO₄³⁻ | 15 | | | |
| | citric acid | 25 | | | |
| l | chromium phosphate | 0.5 | 3.0 | 20 | 10 |
| | cobalt sulfate | 0.1 | | | |
| | sodium molybdate | 0.1 | | | |
| | malonic acid | 0.05 | | | |
| m | CHEMIPEARL W900 | 0.4 | 9.0 | 25 | 15 |

The content of Cr³⁺ in this table means the content of chromium phosphate in Cr content equivalent. The content of Zn²⁺ in this table means the content of zinc oxide in Zn content equivalent. The content of PO₄³⁻ in this table means the content of chromium phosphate in P content equivalent.

### (4) Means for Evaluation

The test plates, most of which were produced by the above-described process and had a chemical conversion coating and an overcoat on a substrate and some of which had a chemical conversion coating without an overcoat, were investigated to for appearance and anti-corrosion properties.

Appearance was investigated with the naked eye and evaluated from the viewpoints of glossiness and uniformity. Evaluation criteria were as follows.

### Glossiness

ⓞ : excellent
○ : good
Δ : bad
× : worse

### Uniformity

ⓞ : excellent
○ : good
Δ : bad
× : worse

To evaluate anti-corrosion properties, the test plate was subjected to a salt spray test based on a test defined by JIS Z2371, and the length of time until white rust developed on the surface of the test plate was measured every 24 hours.

The results of the evaluation are shown in TABLE 4.

**TABLE 4**

| Test Number | Electroplating | Type of chemical conversion treatment | Type of finishing treatment | Period until white rust developd (hours) | glossiness | uniformitiy |
|---|---|---|---|---|---|---|
| 1 | Zn | A | a | 120 | ○ | ○ |
| 2 | Zn | A | b | 96 | ○ | ○ |
| 3 | Zn-Fe alloy | B | c | 144 | ⓞ | ⓞ |
| 4 | Zn | A | d | 120 | ⓞ | ⓞ |
| 5 | Zn | A | e | 120 | ○ | ○ |
| 6 | Zn | A | f | 144 | ⓞ | ⓞ |
| 7 | Zn | A | g | 96 | ⓞ | ⓞ |
| 8 | Zn | C | f | 144 | ⓞ | ⓞ |
| 9 | Zn | A | h | 144 | ⓞ | ⓞ |
| 10 | Zn | A | j | 144 | ⓞ | ⓞ |
| 11 | Zn-Fe alloy | B | i | 144 | ⓞ | ⓞ |
| 12 | Zn | c | h | 144 | ⓞ | ⓞ |
| 13 | Zn | A | without treatment | 24 | × | Δ |
| 14 | Zn-Fe alloy | B | without treatment | 24 | × | Δ |
| 15 | Zn | A | k | 72 | ○ | ○ |
| 16 | Zn-Fe alloy | B | k | 72 | ○ | ○ |
| 17 | Zn | A | l | 72 | ○ | ○ |
| 18 | Zn | A | m | 72 | Δ | Δ |

### (5) Measurement of Total Chromium Content

For the plates of test numbers 9 and 15 in Table 4, before the plate was subjected to the above-described evaluation, a 1 dm² area was immersed in a dilute nitric acid solution so as to remove the surface treatment layer consisting of the chemical conversion coating and the overcoat. The chromium content of each solution in which the surface treatment layer was dissolved was measured by atomic adsorption analysis using novAA 300, which was manufactured by Rigaku Co., Ltd.

The chromium content of the solution of test number 9, namely, which had a chromium-free overcoat, was 0.082mg/dm². On the other hand, the chromium content of the solution of test number 15, namely, which had a chromium-containing overcoat, was 0.67mg/dm². These results indicate that the treatment layer of the present invention can reduce the chromium content by 87.8% compared with the chromium content of a conventional overcoat containing trivalent chromium.

### Example 2

Steel plates having the same shape as the steel plate described in Example 1 were subjected to pretreatment consisting of activation and washing in the same manner as in Example 1. The steel plates after the pretreatment were subjected to chemical conversion treatment C shown in TABLE 1. The steel plates after the chemical conversion treatment were washed for 10 seconds with water at room temperature.

After the washing, some of the steel plates, without first being dried, were subjected to the finishing treatment shown in TABLE 5. Each of the steel plates after the finishing treatment was dried for 10 minutes at 80 degrees C to obtain test plates each having an overcoat. Some of the steel plates after washing without drying were not subjected to finishing treatments. These steel plates were air-dried and used as test plates.

**TABLE 5**

| Type of finishing treatment | | n | o | p | q | r | s | t | u |
|---|---|---|---|---|---|---|---|---|---|
| Al | (g/l) | 2 | 2 | 2 | 10 | 2 | 2 | 5 | 2 |
| Zn | (g/l) | 12 | 12 | 12 | 5 | 5 | 5 | 20 | 5 |
| P | (g/l) | 10 | 10 | | | | | | 5 |
| Si | (g/l) | | | 10 | | 5 | 5 | | |
| Ti | (g/l) | | | | 2 | 1 | 1 | | |
| V | (g/l) | | | | | | | 2 | |
| Ce | (g/l) | | | | | | | | 3 |
| citric acid | (g/l) | 50 | 50 | 50 | 30 | 20 | 20 | 20 | 30 |
| organic binder | (g/l) | | 0.5 | | | | 0.2 | | |
| pH | | 4.5 | 4.5 | 4.5 | 4.0 | 4.0 | 4.0 | 4.0 | 3.5 |
| Temperature of solution | (°C) | 25 | 25 | 25 | 25 | 25 | 25 | 25 | 25 |
| Immersion period | (s) | 10 | 10 | 10 | 10 | 10 | 10 | 10 | 10 |

The values in the rows for Al and Zn indicate the content of aluminum nitrate as an aluminum-containing substance in Al content equivalent and the contents of zinc oxide as a zinc-containing substance in Zn content equivalent, respectively.

The values in the row for P of indicate the content of orthophosphoric acid as a fourth film-forming substance in P content equivalent.

The values in the row for Ti of indicate the content of a solution of titanium (IV) sulfate as a second film-forming substance in Ti content equivalent.

The values in the row for V of indicate the content of sodium metavanadate as a third film-forming substance in V content equivalent.

The values in the row for Si" of indicate the content of lithium silicate as a third film-forming substance in Si content equivalent.

The values in the row for Ce of indicate the content of cerium nitrate as a film-forming additive in Ce content equivalent.

The resulting test plates were evaluated from the viewpoints of the length of time until white rust developed, glossiness, and uniformity in the same manner as in Example 1.

The results of the evaluation are shown in TABLE 6.

**TABLE 6**

| Test Number | Electroplating | Type of chemical conversion treatment | Type of finishing treatment | Period until white rust developed (hours) | glossiness | uniformitiy |
|---|---|---|---|---|---|---|
| 19 | Zn | C | n | 120 | ⓞ | ⓞ |
| 20 | Zn | C | o | 120 | ⓞ | ⓞ |
| 21 | Zn | C | p | 120 | ⓞ | ⓞ |
| 22 | Zn | C | q | 120 | ⓞ | ⓞ |
| 23 | Zn | C | r | 120 | ⓞ | ⓞ |
| 24 | Zn | C | s | 120 | ⓞ | ⓞ |
| 25 | Zn | C | t | 120 | ⓞ | ⓞ |
| 26 | Zn | C | u | 120 | ⓞ | ⓞ |
| 27 | Zn | C | without tretment | 96 | ○ | ○ |

### Example 3

Steel plates having the same shape as the steel plate described in Example 1 were subjected to pretreatment consisting of activation and washing in the same manner as in Example 1. Each of the steel plates after the pretreatment was subjected to one of chemical conversion treatments A to C in TABLE 1. The steel plates after the chemical conversion treatment were washed for 10 seconds with water at room temperature.

After the washing the steel plates, without being dried, were subjected to the finishing treatment shown in TABLE 7. After the finishing treatment, the steel plates were dried for 10 minutes at 80 degrees C to obtain test plates each having an overcoat. The finishing treatment agent of type aj in table 7 is not according to the invention as defined in claim 1, it is a comparative example.

**TABLE 7**

| Type of finishing treatment | | aa | ab | ac | ad | ae | af | ag | ah | ai | aj |
|---|---|---|---|---|---|---|---|---|---|---|---|
| Al | (g/l) | 10 | 8 | 15 | 3 | 1.5 | 2.5 | 5 | 8 | 12 | 1 |
| Zn | (g/l) | 5 | 22 | 5 | 8 | 4 | 7 | 4 | 5 | 3.5 | 9 |
| P | (g/l) | | 37 | 20 | 1.5 | 4 | 10 | 5 | 3 | 16 | 8 |
| Zr | (g/) | 2 | | | | | | | | | |
| Co | (g/l) | | 1.5 | | | 1 | 1 | | | | |
| V | (g/l) | | | | 3 | | 1 | | | | 1 |
| Mo | (g/l) | | | | | | | 2.5 | | | 1 |
| W | (g/l) | | | | | | | | 1 | | |
| Ni | (g/l) | | | | | | | | | 1 | |
| citric acid | (g/l) | 30 | 5 | 60 | 15 | 25 | 18 | 10 | 40 | 30 | 20 |
| malic acid | (g/l) | | 20 | 12 | 10 | | 7 | 15 | | | 5 |
| malonic acid | (g/l) | | | | | | | | 10 | | |
| organic binder | (g/l) | | | 0.4 | | 0.8 | | | | | 1 |
| pH | | 4.0 | 3.5 | 4.0 | 4.0 | 4.5 | 4.0 | 4.0 | 4.5 | 5.0 | 4.5 |
| Temperature of solution | (°C) | 25 | 25 | 25 | 25 | 25 | 25 | 25 | 25 | 25 | 25 |
| Immersion period | (s) | 10 | 10 | 10 | 10 | 10 | 10 | 10 | 10 | 10 | 10 |

The values in the rows for Al indicate the content of aluminum nitrate as an aluminum-containing substance in Al content equivalent for finishing treatment aa and the content of aluminum potassium sulfate as an aluminum-containing substance in Al content equivalent for finishing treatments ab to aj, respectively.

The values in the rows for Zn indicate the content of zinc oxide as a zinc-containing substance in Zn content equivalent.

The values in the row for P of indicate the content of orthophosphoric acid as a fourth film-forming substance in P content equivalent.

The values in the row for Zr of indicate the content of a solution of ammonium zirconium carbonate as a second film-forming substance in Zr content equivalent.

The values in the row for Co of indicate the content of cobalt sulfate as a film-forming additive in Co content equivalent.

The values in the row for V of indicate the content of sodium metavanadate as a film-forming additive in V content equivalent.

The values in the row for Mo of indicate the content of sodium molybdate as a film-forming additive in Mo content equivalent.

The values in the row for W of indicate the content of sodium tangstate as a film-forming additive in W content equivalent.

The values in the row for Ni of indicate the content of nickel sulfate as a film-forming additive in Ni content equivalent.

The test plates were evaluated from the viewpoints of the length of time until white rust developed, glossiness, and uniformity in the same manner as in Example 1.

The results of the evaluation are shown in TABLE 8.

**TABLE 8**

| Test Number | Electroplating | Type of chemical conversion treatment | Type of finishing treatment | Period until white rust developd (hours) | glossiness | uniformity |
|---|---|---|---|---|---|---|
| 28 | Zn | C | aa | 120 | ⓞ | ⓞ |
| 29 | Zn | A | ab | 120 | ○ | ○ |
| 30 | Zn | A | ac | 144 | ⓞ | ⓞ |
| 31 | Zn | A | ad | 144 | ⓞ | ⓞ |
| 32 | Zn | A | ae | 120 | ⓞ | ⓞ |
| 33 | Zn | A | af | 144 | ⓞ | ⓞ |
| 34 | Zn-Fe alloy | B | af | 144 | ⓞ | ⓞ |
| 35 | Zn | A | ag | 144 | ⓞ | ⓞ |
| 36 | Zn | A | ah | 120 | ⓞ | ⓞ |
| 37 | Zn | A | ai | 120 | ⓞ | ⓞ |
| 38 | Zn | A | aj | 144 | ○ | ○ |

## Claims

1. A finishing agent for use in forming an overcoat on an oxidation-resistant layer on a substrate, comprising:
an aluminum-containing substance in the form of at least one of a cation, a salt of the cation, and a coordination compound containing the cation, wherein the content of the aluminum-containing substance is 1.5 g/L to 14 g/L in aluminum content equivalent;
a zinc-containing substance in the form of at least one of a cation, a salt of the cation, and a coordination compound containing the cation, wherein the content of the zinc-containing substance is 3 g/L to 20 g/L in zinc content equivalent ;
a carboxylic acid chelating agent in the form of a free acid or a salt which is able to form a coordination compound with an aluminum ion, said carboxylic acid chelating agent comprising citric acid ;
a film-forming substance containing a first element selected from the group consisting of P, Mo, W, Ce, Mn, Si, Ti, Zr, and V.

2. The finishing agent according to claim 1, wherein the content of the first film-forming substance is 0.1 to 200g/l.

3. The finishing agent according to claim 1, wherein the film-forming substance contains a second element selected from the group consisting of Ce, Mn, Ti, and Zr, and is in the form of at least one of a cation of the second element, a salt of the cation, and a coordination compound containing the cation.

4. The finishing agent according to claim 1, wherein the film-forming substance contains a third element selected from the group consisting of Mo, W, Si, and V, and is in the form of at least one of an oxygen acid of the third element, an anion of the oxygen acid, and a salt of the oxygen acid.

5. The finishing agent according to claim 1, wherein the film-forming substance contains P and is in the form of at least one of an oxygen acid of P, an anion of the oxygen acid, and a salt of the oxygen acid.

6. The finishing agent according to claim 5 further comprising a chemical substance containing an element selected from the group consisting of Mo, W, Ce, Co, Ni, Mg, Ca, Mn, Li, Si, Zr, Ti, and V.

7. The finishing agent according to any one of claims 1 to 6, further comprising an organic binder.

8. The finishing agent according to any one of claims 1 to 7, wherein the oxidation-resistant layer comprises a chromium-free chemical conversion coating, and wherein the finishing agent contains a material which is at least one of the components of the oxidation-resistant layer and/or a material which can form a strong chemical bond with a component of the oxidation-resistant layer.

9. The finishing agent according to any one of claims 1 to 7, wherein the oxidation-resistant layer comprises a hexavalent chromium-free chemical conversion coating containing trivalent chromium, and wherein the finishing agent contains a material which is at least one of the components of the oxidation-resistant layer and/or a material which can form a strong chemical bond with a component of the oxidation-resistant layer.

10. The finishing agent according to any one of claims 1 to 7, wherein the oxidation-resistant layer comprises a chromium-free chemical conversion coating containing Al, Si, and Ti, and wherein the finishing agent contains a material which is at least one of the components of the oxidation-resistant layer and/or a material which can form a strong chemical bond with a component of the oxidation-resistant layer.

11. The finishing agent according to claim 5 wherein the content of film forming substance is 0.1 to 60 g/l in P content.

12. A member comprising a substrate, an oxidation-resistant layer disposed on the substrate, and an overcoat disposed on the oxidation-resistant layer, wherein the overcoat is formed from the finishing agent described in any one of claims 1 to 10.

13. The member according to claim 12, wherein the oxidation-resistant layer comprises a hexavalent chromium-free chemical conversion coating.

14. The member according to claim 12, wherein the oxidation-resistant layer comprises a chromium-free chemical conversion coating.

15. The member according to claim 12 wherein the oxidation-resistant layer comprises a hexavalent chromium-free chemical conversion coating containing trivalent chromium, and the overcoat is formed from the finishing agent described in any one of claims 5 or 6.

16. A process for producing a member comprising a step of preparing a substrate having a surface on which an oxidation-resistant layer is disposed, the oxidation-resistant layer consisting of a hexavalent chromium-free chemical conversion coating, and a step of contacting the finishing agent described in any one of claims 1 to 10 with the oxidation-resistant layer in order to form an overcoat on the oxidation-resistant layer.

## Patentansprüche

1. Veredelungsmittel zur Verwendung bei der Herstellung einer Deckschicht auf einer oxidationsbeständigen Schicht auf einem Substrat, aufweisend:
eine Aluminium enthaltende Substanz in Form eines Kations und/oder eines Salzes des Kations und/oder einer Koordinationsverbindung, die das Kation enthält, wobei der Gehalt an der Aluminium enthaltenden Substanz einem Aluminium-Gehalt von 1,5 g/l bis 14 g/l äquivalent ist;
eine Zink enthaltende Substanz in Form eines Kations und/oder eines Salzes des Kations und/oder einer Koordinationsverbindung, die das Kation enthält, wobei der Gehalt an der Zink enthaltenden Substanz einem Zink-Gehalt von 3 g/l bis 20 g/l äquivalent ist;
einen Carbonsäure-Chelatbildner in Form einer freien Säure oder eines Salzes, der in der Lage ist, mit einem Aluminiumion eine Koordinationsverbindung zu bilden, wobei der Carbonsäure-Chelatbildner Zitronensäure aufweist;
eine filmbildende Substanz, die ein erstes Element enthält, das ausgewählt ist aus der Gruppe, die aus P, Mo, W, Ce, Mn, Si, Ti, Zr und V besteht.

2. Veredelungsmittel nach Anspruch 1, wobei der Gehalt an der ersten filmbildenden Substanz 0,1 bis 200 g/l beträgt.

3. Veredelungsmittel nach Anspruch 1, wobei die filmbildende Substanz ein zweites Element enthält, das ausgewählt ist aus der Gruppe, die aus Ce, Mn, Ti und Zr besteht, und in der Form eines Kations des zweiten Elements und/oder eines Salzes des Kations und/oder einer Koordinationsverbindung, die das Kation enthält, ist.

4. Veredelungsmittel nach Anspruch 1, wobei die filmbildende Substanz ein drittes Element enthält, das ausgewählt ist aus der Gruppe, die aus Mo, W, Si und V besteht, und in der Form einer Sauerstoffsäure des dritten Elements und/oder eines Anions der Sauerstoffsäure und/oder eines Salzes der Sauerstoffsäure ist.

5. Veredelungsmittel nach Anspruch 1, wobei die filmbildende Substanz P enthält, und in der Form einer Sauerstoffsäure von P und/oder eines Anions der Sauerstoffsäure und/oder eines Salzes der Sauerstoffäure ist.

6. Veredelungsmittel nach Anspruch 5, außerdem aufweisend eine chemische Substanz, die ein Element enthält, das ausgewählt ist aus der Gruppe, die aus Mo, W, Ce, Co, Ni, Mg, Ca, Mn, Li, Si, Zr, Ti und V besteht.

7. Veredelungsmittel nach einem der Ansprüche 1 bis 6, außerdem aufweisend ein organisches Bindemittel.

8. Veredelungsmittel nach einem der Ansprüche 1 bis 7, wobei die oxidationsbeständige Schicht eine chromfreie chemische Konversionsbeschichtung aufweist, und wobei das Veredelungsmittel ein Material enthält, das mindestens eine der Komponenten der oxidationsbeständigen Schicht und/oder ein Material, das mit einer Komponente der oxidationsbeständigen Schicht eine starke chemische Bindung ausbilden kann, ist.

9. Veredelungsmittel nach einem der Ansprüche 1 bis 7, wobei die oxidationsbeständige Schicht eine von sechswertigem Chrom freie chemische Konversionsbeschichtung, die dreiwertiges Chrom enthält, aufweist, und wobei das Veredelungsmittel ein Material enthält, das mindestens eine der Komponenten der oxidationsbeständigen Schicht und/oder ein Material, das mit einer Komponente der oxidationsbeständigen Schicht eine starke chemische Bindung ausbilden kann, ist.

10. Veredelungsmittel nach einem der Ansprüche 1 bis 7, wobei die oxidationsbeständige Schicht eine chromfreie chemische Konversionsbeschichtung, die Al, Si und Ti enthält, aufweist, und wobei das Veredelungsmittel ein Material enthält, das mindestens eine der Komponenten der oxidationsbeständigen Schicht und/oder ein Material, das mit einer Komponente der oxidationsbeständigen Schicht eine starke chemische Bindung ausbilden kann, ist.

11. Veredelungsmittel nach Anspruch 5, wobei der Gehalt an filmbildender Substanz einem P-Gehalt von 0,1 bis 60 g/l äquivalent ist.

12. Gegenstand aufweisend ein Substrat, eine auf dem Substrat befindliche oxidationsbeständige Schicht, und eine auf der oxidationsbeständigen Schicht befindliche Deckschicht, wobei die Deckschicht aus dem in einem der Ansprüche 1 bis 10 beschriebenen Veredelungsmittel ausgebildet ist.

13. Gegenstand nach Anspruch 12, wobei die oxidationsbeständige Schicht eine von sechswertigem Chrom freie chemische Konversionsbeschichtung aufweist.

14. Gegenstand nach Anspruch 12, wobei die oxidationsbeständige Schicht eine chromfreie chemische Konversionsbeschichtung aufweist.

15. Gegenstand nach Anspruch 12, wobei die oxidationsbeständige Schicht eine von sechswertigem Chrom freie chemische Konversionsbeschichtung, die dreiwertiges Chrom enthält, aufweist, und die Deckschicht aus dem in einem der Ansprüche 5 oder 6 beschriebenen Veredelungsmittel ausgebildet ist.

16. Verfahren zur Herstellung eines Gegenstands, aufweisend einen Schritt des Bereitstellens eines Substrats mit einer Oberfläche, auf der sich eine oxidationsbeständige Schicht befindet, wobei die oxidationsbeständige Schicht aus einer von sechswertigem Chrom freien chemischen Konversionsbeschichtung besteht, und einen Schritt des in Kontakt bringens des in einem der Ansprüche 1 bis 10 beschriebenen Veredelungsmittels mit der oxidationsbeständigen Schicht, um auf der oxidationsbeständigen Schicht eine Deckschicht auszubilden.

## Revendications

1. Agent de finition destiné à être utilisé pour former une couche de finition sur une couche résistant à l'oxydation sur un substrat, comprenant :
une substance contenant de l'aluminium sous la forme d'au moins un élément parmi un cation, un sel du cation, et un composant de coordination contenant le cation, dans lequel la teneur en substance contenant de l'aluminium est comprise dans l'intervalle allant de 1,5 g/l à 14 g/l en teneur en aluminium équivalente ;
une substance contenant du zinc sous la forme d'au moins un élément parmi un cation, un sel du cation, et un composant de coordination contenant le cation, dans lequel la teneur en substance contenant du zinc est comprise dans l'intervalle allant de 3 g/l à 20 g/l en teneur en zinc équivalente ;
un agent chélateur d'acide carboxylique sous la forme d'un acide libre ou d'un sel capable de former un composant de coordination avec un ion aluminium, ledit agent chélateur d'acide carboxylique comprenant de l'acide citrique ;
une substance filmogène contenant un premier élément sélectionné parmi le groupe consistant en P, Mo, W, Ce, Mn, Si, Ti, Zr et V.

2. Agent de finition selon la revendication 1, dans lequel la teneur de la première substance filmogène est comprise dans l'intervalle allant de 0,1 à 200 g/l.

3. Agent de finition selon la revendication 1, dans lequel la substance filmogène contient un deuxième élément sélectionné parmi le groupe consistant en Ce, Mn, Ti et Zr, et se présente sous la forme d'au moins un élément parmi un cation du deuxième élément, un sel du cation, et un composant de coordination contenant le cation.

4. Agent de finition selon la revendication 1, dans lequel la substance filmogène contient un troisième élément compris dans le groupe consistant en Mo, W, Si et V, et se présente sous la forme d'au moins un élément parmi un acide oxygéné du troisième élément, un anion de l'acide oxygéné, et un sel de l'acide oxygéné.

5. Agent de finition selon la revendication 1, dans lequel la substance filmogène contient P, et se présente sous la forme d'au moins un élément parmi un acide oxygéné de P, un anion de l'acide oxygéné, et un sel de l'acide oxygéné.

6. Agent de finition selon la revendication 5, comprenant en outre une substance chimique contenant un élément sélectionné parmi le groupe consistant en Mo, W, Ce, Co, Ni, Mg, Ca, Mn, Li, Si, Zr, Ti et V.

7. Agent de finition selon l'une quelconque des revendications 1 à 6, comprenant en outre un liant organique.

8. Agent de finition selon l'une quelconque des revendications 1 à 7, dans lequel la couche résistant à l'oxydation comprend un revêtement de conversion chimique exempt de chrome, et dans lequel l'agent de finition contient un matériau qui est au moins un des composants de la couche résistant à l'oxydation et/ou un matériau qui peut former une liaison chimique forte avec un composant de la couche résistant à l'oxydation.

9. Agent de finition selon l'une quelconque des revendications 1 à 7, dans lequel la couche résistant à l'oxydation comprend un revêtement de conversion chimique exempt de chrome hexavalent contenant du chrome trivalent, et dans lequel l'agent de finition contient un matériau qui est au moins un des composants de la couche résistant à l'oxydation et/ou un matériau qui peut former une liaison chimique forte avec un composant de la couche résistant à l'oxydation.

10. Agent de finition selon l'une quelconque des revendications 1 à 7, dans lequel la couche résistant à l'oxydation comprend un revêtement de conversion chimique exempt de chrome contenant du Al, Si et Ti, et dans lequel l'agent de finition contient un matériau qui est au moins un des composants de la couche résistant à l'oxydation et/ou un matériau qui peut former une liaison chimique forte avec un composant de la couche résistant à l'oxydation.

11. Agent de finition selon la revendication 5, dans lequel la teneur de la substance filmogène est comprise dans l'intervalle allant de 0,1 à 60 g/l pour la teneur en P.

12. Elément comprenant un substrat, une couche résistant à l'oxydation disposée sur le substrat, et une couche de finition disposée sur la couche résistant à l'oxydation, dans lequel la couche de finition est formée à partir de l'agent de finition selon l'une quelconque des revendications 1 à 10.

13. Elément selon la revendication 12, dans lequel la couche résistant à l'oxydation comprend un revêtement de conversion chimique exempt de chrome hexavalent.

14. Elément selon la revendication 12, dans lequel la couche résistant à l'oxydation comprend un revêtement de conversion chimique exempt de chrome.

15. Elément selon la revendication 12, dans lequel la couche résistant à l'oxydation comprend un revêtement de conversion chimique exempt de chrome hexavalent contenant du chrome trivalent, et la couche de finition est formée à partir de l'agent de finition selon l'une quelconque des revendications 5 ou 6.

16. Procédé destiné à produire un élément comprenant une étape pour préparer un substrat présentant une surface sur laquelle est disposée une couche résistant à l'oxydation, la couche résistant à l'oxydation consistant en un revêtement de conversion chimique exempt de chrome hexavalent, et une étape pour mettre l'agent de finition selon l'une quelconque des revendications 1 à 10 en contact avec la couche résistant à l'oxydation afin de former une couche de finition sur la couche résistant à l'oxydation.
